# EUROPÄISCHE PATENTANMELDUNG

(11) **EP 0 684 213 A1**
(43) Veröffentlichungstag der Anmeldung: **29.11.1995**
(21) Anmeldenummer: 95105332.1
(22) Anmeldetag: 08.04.1995
(51) Int. Cl.: C04B 28/02, E02D 31/00

(54) **Wässrige Dichtwandmasse**

(30) Priorität: 27.05.1994 DE 4418596
(71) Anmelder: SÜD-CHEMIE AG, D-80333 München (DE)
(72) Erfinder: Hähn, Reinhard, Dr., D-84186 Vilsheim (DE); Schall, Norbert, Dr., D-85465 Langenpreising (DE); Simmler-Hübenthal, Hubert, D-85368 Moosburg (DE)
(74) Vertreter: Reitzner, Bruno, Dr.

(57) **Zusammenfassung**

Beschrieben wird eine wäßrige Dichtwandmasse zur Adsorption von Umweltschadstoffen, auf der Basis von hydraulischem Bindemittel und mindestens einem anorganischen Aktivsmektit, die dadurch gekennzeichnet ist, daß sie vordispergierten anorganischen Smektit sowie mindestens einen organophilen Smektit enthält, wobei das Gewichtsverhältnis zwischen anorganischem Aktivsmektit und organophilem Smektit (bezogen auf Trockenmasse) etwa 2:1 bis 50:1, der Wassergehalt etwa 60 bis 95 Gew.-% und die Dichte etwa 1,1 bis 1,8 g/cm³ beträgt.

## Beschreibung

Die Erfindung betrifft eine wäßrige Dichtwandmasse zur Adsorption von Umweltschadstoffen, auf der Basis von hydraulischem Bindemittel und mindestems einem anorganischen Aktivsmektit.

Trotz der relativen Undurchlässigkeit von Dichtwänden gegenüber Wasser kann die Diffusion bzw. Permeation von in Wasser gelösten anorganischen und organischen Schadstoffen nicht völlig unterbunden werden.

Vertikale Dichtwände verschiedener Bauarten sind seit langem z.B. als wasserdichte Baugrubenumschließungen oder als Uferdichtungen an Gewässern bekannt.

Seit Ende der 70er Jahre werden insbesondere zur Sanierung von bestehenden Deponien bzw. Altlastenstandorten Dichtwandsysteme ausgeführt, um einen Schadstoffherd einzukapseln.

Eine solche Dichtwand hat meist zwei wesentliche Funktionen: Zum einen das Zurückhalten von Sickerwässern bzw. kontaminierten Wasserströmen in einem Deponiekörper bzw. einem Altlastenstandort. Eine weitere Funktion ist in der Unterbrechnung eines vorhandenen Grundwasserstromes im Bereich des Schadstoffherdes zu sehen, da dieser einen bedeutsamen Emissionspfad für Schadstoffe darstellt.

Zu diesem Zweck wird eine Dichtwand in der Regel bis zu einer undurchlässigen Bodenschicht geführt bzw. in diese eingebunden. Die konventionelle Erstellung von Dichtwänden erfolgt in Schlitzwandbauweise. Charakteristisch für diese Bauweise ist, daß während der Aushubphase der offene Schlitz durch eine Suspension gestützt wird. Während beim Zweiphasenverfahren die Stützsuspension nach dem Erreichen der Endtiefe gegen die eigentliche Dichtwandmasse ausgetauscht wird und entsorgt werden muß, verbleibt beim sogenannten Einphasenverfahren die Stützsuspension als Dichtwandmasse im Schlitz. Diese einphasige Verfahrensweise wird heute überwiegend angewendet, da sie eine durchgehend homogene Dichtwand bei raschem Baufortschritt ermöglicht.

Fester Bestandteil dieser Mischung ist neben dem Zement das Tonmineral Bentonit (ein smektitisches Tonmineral), welches durch seine charakteristische Eigenschaft des Quellens in Wasser eine hohe Wasserundurchlässigkeit der fertigen Dichtwand gewährleistet. Auf diese Weise können Durchlässigkeitsbeiwerte (k) erreicht werden, die im Bereich von 10⁻⁸ bis 10⁻¹⁰ m/s liegen.

Da jedoch auch mit den heute angewendeten Systemen keine absolute Dichtigkeit gegenüber Wasser und darin gelösten organischen Verbindungen erreichbar ist (D. Urban, BBR 3/93, 44. Jahrgang, S. 102-110), werden teilweise zusätzliche Maßnahmen ergriffen, um Kontaminationen angrenzender Bodenschichten und insbesondere Grundwasserleiter zu verhindern.

Dazu zählen das Einstellen von Spundprofilen, das Einhängen von HDPE-Folienbahnen (HDPE = Polyethylen mit hoher Dichte), an Einbaugestellen, das Einbringen von Spezialglas-Profilen in ein- oder mehrreihiger Anwendung, oder ähnliche Maßnahmen. Alle diese in Kombinatonsdichtwänden ausgeführten Maßnahmen sind mit Nachteilen behaftet.

Bei Spundprofilen besteht das Problem des Abdichtens der Fugen. HDPE-Folien sind äußerst empfindlich gegen mechanische Belastung, und die einzelnen Folienbahnen sind nur schwer dicht miteinander zu verbinden. Auch die Spezialglasprofile müssen aufwendig über kraftschlüssige Schlösser miteinander verbunden werden und verursachen deutliche Mehrkosten.

Allen aufgezählten Maßnahmen haftet gemeinsam der Nachteil an, daß sie einen zusätzlichen Arbeitsgang erforderlich machen.

Aus der DE-A-42 41 714 sind schadstoffresistente Massen bekannt, die Organopolysiloxane enthalten. Sie werden zur Herstellung von Dichtwänden und ähnlichen, in das Erdreich eingebrachten Bodenabdichtungen, eingesetzt. Sie enthalten
(A) Salze von organischen oder anorganischen Säuren und Organopolysiloxanen bestimmter Zusammensetzung;
(B) Organosiliciumverbindungen mit basischem Stickstoff in kleineren Mengen;
(C) quellfähige Tonmineralien
(D) hydraulische Bindemittel
(E) Betonzusatzmittel und
(F) Füllstoffe.

Aufgabe ist die Verbesserung der Beständigkeit von hochgefüllten Dichtwandmassen gegenüber dem Einfluß von penetrierenden Schadstoffen. Diese Aufgabe wird durch Erhöhung des Füllstoffanteils und den Zusatz der Organopolysiloxane bzw. Organosiliciumverbindungen gelöst. Diese Verbindungen sind jedoch verhältnismäßig teuer.

Aus der DE-C-42 05 354 ist eine Trockenmischung zur Herstellung hydromechanisch förderbarer Baustoffsuspensionen bekannt, die eine Mischung aus 10 bis 80 Gew.-Teilen hydraulischer Bindemittel auf Zementklinkerbasis, 10 bis 80 Gew.-Teilen Filterasche aus Kohlefeuerungen, 1 bis 20 Gew.-Teile quellfähige Tone, 0,1 bis 1 Gew.-Teil Abbindeverzögerer und 0,1 bis 2 Gew.-Teile eines Fließmittels oder Betonverflüssigers (wie Ligninsulfonat) enthält, wobei die Anteile der quellfähigen Tone, Abbindeverzögerer und Fließmittel so abgestimmt sind, daß eine daraus hergestellte Baustofftrübe mit einem Wasser/Feststoff-Wert von 0,25 bis 1 mindestens 24 Stunden bei Temperaturen bis zu 30°C hydromechanisch förderbar bleibt, ohne zu sedimentieren oder abzubinden. Organophile Smektite sind nicht erwähnt. Außerdem finden sich keine Hinweise auf die Adsorption von Schadstoffen.

Aus der DE-A-38 12 705 ist ein Verfahren zur Behandlung bzw. Aufbereitung von Ton oder tonigen Massen für die Aufnahme von zu entsorgenden Stoffen bekannt, wobei dem mit Wasser gemaukten (feucht gelagerten) Ton oder der tonigen Masse Kapillarwasser und Adhäsionswasser entzogen und dadurch die Oberfläche der Tonteilchen für die Aufnahme von feinverteilten Schadstoffen aktiviert wird. Das mit den Schadstoffen beladene Material wird unter Zuhilfenahme von Zement brikettiert oder als Deponieabdichtung verwendet. Die Verwendung von organophilem Smektit ist nicht erwähnt.

Aus der EP-A-0 542 266 sind organophile Tone vom Smektittyp bekannt, die durch Umsetzung eines anorganischen Smektits mit einem ersten organischen Kation, z.B. aus quaternären Ammoniumsalzen, und einem zweiten organischen Kation aus polyalkoxidierten quaternären Ammoniumsalzen hergestellt werden. Die organophilen Tone werden als Verdickungsmittel für lösungsmittelhaltige Farben- und Lacksysteme verwendet.

Aus der DE-C-40 29 213 ist ein Adsorptionsmittel für Schadstoffe, insbesondere in flüssigen Medien, bekannt, das eine wäßrige Aufschlämmung einer Feststoffmischung, die 20 bis 80 Gew.-% eines zumindest teilweise hydratisierten anorganischen Bindemittels und 80 bis 20 Gew.-% eines oder mehrerer Tone und/oder Tonminerale enthält, darstellt. Das Adsorptionsmittel wird im Abwasserbereich verwendet und enthält keinen organophilen Ton.

Aus der DE-C-37 17 885 ist ein Verfahren zur Herstellung einer flächigen Dichtungsschicht mit hohem Feststoffanteil aus einer dichtgelagerten Mischung aus mineralischen Dichtungsmaterialien, wie Bentonit, und Wasser bekannt, wonach die dichtungsschichtbildenden Materialien trocken vorgemischt und als trockene Mischung eingebaut werden, worauf die für die Wirksamkeit des Gemisches als Dichtungsschicht erforderliche Feuchtigkeit nach dem Einbau zugeführt wird. Es wird keine Adsorption beabsichtigt; die Verwendung eines organophilen Tones ist nicht beabsichtigt.

Aus der DD-A-299 387 ist eine Dichtungsmasse auf Tonmehlbasis zur Herstellung von Dichtungsschichten bekannt, die ein fugenloses Mineralstoffdichtsystem, bestehend aus nicht klassifiziertem Feinsand und einem Tonmehl mit einem Kaolingehalt von durchschnittlich 11% und einem unregelmäßigen Illit-Smektit-Wechsellagerungsanteil von durchschnittlich 44% besteht, wobei das Gemisch derart zusammengesetzt ist, daß eine maximale Durchlässigkeit von 1·10⁻⁹ m/s entsteht. Es sollen in erster Linie Güllelagunen abgedichtet werden. An eine Adsorption von organischen Schadstoffen ist nicht gedacht. Organophile Tone sind nicht erwähnt.

Der vorliegenden Erfindung liegt die Aufgabe zugrunde, eine wäßrige Dichtwandmasse bereitzustellen, welche nach dem Abbinden des hydraulischen Bindemittels die Permeation auch geringer organischer Schadstoffmengen durch die Dichtwand hindurch wirksam zu verhindern in der Lage ist, ohne einen deutlichen Mehraufwand an Arbeit, Zeit und Kosten zu verursachen.

Diese Aufgabe wird durch eine wäßrige Dichtwandmasse zur Adsorption von Umweltschadstoffen, auf der Basis von hydraulischem Bindemittel und mindestens einem anorganischen Aktivsmektiv gelöst, das dadurch gekennzeichnet ist, daß sie vordispergierten anorganischen Smektit sowie mindestens einen organophilen Smektit enthält, wobei das Gewichtsverhältnis zwischen anorganischem Aktivsmektit und organophilem Smektit (bezogen auf Trockenmasse) etwa 2:1 bis 50:1, der Wassergehalt etwa 60 bis 90 Gew.-% und die Dichte etwa 1,1 bis 1,8 g/cm³ beträgt.

Durch den Einbau des organophilen Smektits können anorganische und organische Schadstoffströme innerhalb der hydraulisch abgebundenen Dichtwand wirkungsvoll adsorbiert werden, wodurch deren Durchtritt verhindert wird.

Vorzugsweise beträgt das Gewichtsverhältnis zwischen anorganischem Aktivsmektit und organophilem Smektit etwa 3:1 bis 20:1, insbesondere etwa 3:1 bis 8:1.

Im allgemeinen enthält die Dichtwandmasse etwa
150-350 kg/m³ hydraulisches Bindemittel,
25-85 kg/m³ anorganischen Aktivsmektit und
etwa 750-950 kg/m³ Wasser.

Ihre Dichte beträgt vorzugsweise etwa 1,1 bis 1,5 g/cm³.

Insbesondere enthält die Dichtwandmasse
etwa 175-250, vorzugsweise etwa 175-200 kg/m³
hydraulisches Bindemittel,
etwa 30-50, vorzugsweise etwa 35-45 kg/m³
anorganischen Aktivsmektit,
etwa 1,5-17, vorzugsweise etwa 7,5-15 kg/m³
organophilen Smektit, und
etwa 800 bis 900 kg/m³ Wasser.

Ihre Dichte beträgt vorzugseise 1,1 bis 1,2 g/cm³.

Der organophile Smektit ist ein Reaktionsprodukt eines anorganischen Smektits mit einer kationischen, organischen Verbindung, vorzugsweise einer quaternären Ammoniumverbindung.

Das Ausgangsmaterial für den organophilen Smektit bzw. den anorganischen Aktivsmektit ist aus der Gruppe der Montmorillonite, Beidellite, Hectorite und Saponite ausgewählt.

Diese Ausgangsmaterialien haben im allgemeinen eine Kationenaustauschkapazität (KAK) von mindestens 30 mVal, vorzugsweise von 60 bis 80 mVal je 100 g. Die organophilen Bentonit sind zu wenigstens 30%, vorzugsweise zu wenigstens 40% ihrer KAK mit einem organischen Kation, vorzugsweise aus der Gruppe der quaternären Ammoniumverbindungen, belegt.

Die besonders bevorzugten Montmorillonite bilden das Hauptmineral der Bentonite, weshalb die Erfindung nachstehend anhand des Bentonit erläutert ist.

Organophile Bentonite haben eine Adsorptionskapazität für organische Verbindungen, welche irreversibel zwischen den Silikatlamellen eingelagert werden (Wolfe, Demirel, Baumann, 1986, Journal WPCF, Vol. 58 (1986) S.68-76; Mortland, Shaobai, Boyd, "Clays and Clay Minerals", Vol. 34, No. 5 (1986), S 581-585). Diese Adsorptionseigenschaften gehen überraschenderweise in einer Dichtwandmasse, die hydraulisches Bindemittel und anorganischen Aktivsmektit enthält, wie sie üblicherweise in Schlitzwandverfahren zur Anwendung kommt, nicht verloren.

Das zusätzliche Einbringen von in Wasser nicht quellfähigen Feststoffen führt häufig zu einer negativen Beeinflussung der rheologischen Eigenschaften der Dichtwandsuspension, die für die technische Verarbeitbarkeit, insbesondere im Einphasen-Schlitzwandverfahren von ausschlaggebender Bedeutung sind.

Dieser Nachteil kann überraschenderweise durch ein Verfahren verhindert werden, bei dem man eine wäßrige Suspension, enthaltend den anorganischen Aktivsmektit, mit dem hydraulischen Bindemittel und dem organophilen Smektit bzw. mit einer Vormischung des hydraulischen Bindemittels mit dem organophilen Smektit vermischt.

Bei der gemeinsamen Dispergierung von nicht vordispergiertem anorganischem Aktivsmektit und organophilem Smektit kommt es dagegen zu einer signifikanten Erniedrigung der Fließgrenze nach Soos sowie der Viskosität nach Marsh (DIN 4127) in der Fertigsuspension.

Die Erfindung ist durch die nachstehenden Beispiele erläutert.

### Beispiel 1

Es wurden Dichtwandmassen in Anlehnung an DIN 4127 auf folgende Weise hergestellt:
A. In 2 l Leitungswasser wurden 70 g eines Aktivbentonits in der Na-Form, der auch in einer zementhaltigen Suspension seine Quellfähigkeit nicht verliert (Tixoton ® CV 15 der Firma Süd-Chemie AG) eingerührt und anschließend mit einem hochscherenden Rührer bei 2800 Upm dispergiert. Nach 1 h Ruhezeit (zur Quellung des Aktivbentonits) wurden 400 g Hochofenzement (HOZ) eingerührt, und das Gemisch wurde nochmals 7 min. in der vorstehend angegebenen Weise dispergiert.
B. Abweichend von A) wurden in einem zweiten Ansatz zusammen mit dem Hochofenzement 20 g eines organophilen Bentonits (Tixosorb ® der Firma Süd-Chemie AG) eingerührt, und das Gemisch wurde wie nach A) weiterverarbeitet.
C. Abweichend von A) wurde in einem weiteren Ansatz in 2 l Leitungswasser ein Gemisch aus 70 g Tixoton ® CV15 und 20 g Tixosorb ® eingerührt und wie nach A) dispergiert. Ebenfalls nach 1 h Ruhezeit wurden 400 g Hochofenzement eingerührt und wie nach A) nachdispergiert.

Die Fließgrenzen sowie die Viskositäten der Suspensionen sind in Abhängigkeit von der Quellzeit in Fig. 1 bzw. Fig. 2 angegeben.

Die Ergebnisse lassen sich wie folgt interpretieren:
Während bei der gemeinsamen Dosierung von anorganischem Aktivbentonit und organophilem Bentonit (C) eine deutliche Verschlechterung der rheologischen Eigenschaften der fertigen Suspension gegenüber der Standardsuspension ohne organophilen Bentonit (A) auftritt, kann dieser negative Effekt nahezu vollständig vermieden werden, wenn der organophile Bentonit nach (B) gemeinsam mit Zement in die bereits vorgequollene Suspension des anorganischen Aktivbentonits eingerührt wird.

### Beispiel 2

Es wurden Dichtwandmassen aus Natriumbentonit (Tixoton ® CV15), Hochofenzement (HOZ), Wasser und organophilem Bentonit (Tixosorb ® CV15) in den in der nachstehenden Tabelle angegebenen Mischungsverhältnissen hergestellt.

Die Dichtwandmassen wurden in zylindrische Probengefäße mit einem Innendurchmesser von 10 cm und einer Höhe von 10 cm gegossen und 14 Taqe aushärten gelassen. Die ausgehärteten Probenkörper wurden in Anlehnung an DIN 18 130 in eine Triaxialzelle eingebaut und unter einem hydraulischem Gefälle von i = 30 mit einer wäßrigen Schadstofflösung durchströmt, welche 100 ppm Phenol enthielt. Die Phenolbestimmung im Permeat erfolgte nach der HPLC-Methode. Der Durchlässigkeitsbeiwert (k) wurde nach DIN 18 130 bestimmt. Die Meßergebnisse sind ebenfalls in der Tabelle angegeben.

**Tabelle**

| Dichtwandmasse Na-Bentonit/HOZ/H₂O/Org.Bent. (kg/m³) | k (m/s) nach 14 d | Phenolat > 50 ppm nach Stunden |
|---|---|---|
| 30/175/933/0 | 7,1 . 10⁻⁷ | 52 |
| 30/175/933/5 | 7,3 . 10⁻⁷ | > 168 |
| 35/200/923/0 | 5,9 . 10⁻⁷ | 72 |
| 35/200/923/5 | 6,3 . 10⁻⁷ | > 168 |

Die in der Tabelle angegebenen Ergebnisse zeigen, daß die Durchlässigkeit der erfindungsgemäßen Dichtwandmasse nach dem hydraulischem Abbinden für Phenole deutlich niedriger ist als die Dichtwandmasse ohne organophilen Bentonit. Auch nach 168 Stunden lag der Phenolgehalt im Permeat noch deutlich unter 50 ppm. Der Durchlässigkeitsbeiwert (k) wird durch die Anwesenheit des organophilen Bentonits in der hydraulisch abgebundenen Dichtwandmasse nicht beeinträchtigt.

## Patentansprüche

1. Wäßrige Dichtwandmasse zur Adsorption von Umweltschadstoffen, auf der Basis von hydraulischem Bindemittel und mindestens einem anorganischen Aktivsmektit, dadurch gekennzeichnet, daß sie vordispergierten anorganischen Smektit sowie mindestens einen organophilen Smektit enthält, wobei das Gewichtsverhältnis zwischen anorganischem Aktivsmektit und organophilem Smektit (bezogen auf Trockenmasse) etwa 2:1 bis 50:1, der Wassergehalt etwa 60 bis 95 Gew.-% und die Dichte etwa 1,1 bis 1,8 g/cm³ beträgt.

2. Dichtwandmasse nach Anspruch 1, dadurch gekennzeichnet, daß das Gewichtsverhältnis zwischen anorganischem Aktivsmektit und organophilem Smektit etwa 3:1 bis 20:1, insbesondere etwa 3:1 bis 8:1, beträgt.

3. Dichtwandmasse nach Anspruch 1 oder 2, dadurch gekennzeichnet, daß sie
etwa 150-350 kg/m³ hydraulisches Bindemittel,
etwa 25-85 kg/m³ anorganischen Aktivsmektit,
etwa 0,5-40 kg/m³ organophilen Smektit und
etwa 750-950 kg/m³ Wasser
enthält und eine Dichte von etwa 1,1 bis etwa 1,5 g/cm³ aufweist.

4. Dichtwandmasse nach Anspruch 3, dadurch gekennzeichnet, daß sie
etwa 175-250, vorzugsweise etwa 175-200 kg/m³
hydraulisches Bindemittel,
etwa 30-50, vorzugsweise etwa 35-45 kg/m³
anorganischen Aktivsmektit,
etwa 1,5-17, vorzugsweise etwa 7,5-15 kg/m³
organophilen Bentonit, und
etwa 800-900 kg/m³ Wasser
enthält und eine Dichte von etwa 1,1 bis 1,2 g/cm³ aufweist.

5. Dichtwandmasse nach einem der Ansprüche 1 bis 4, dadurch gekennzeichnet, daß der organophile Smektit ein Reaktionsprodukt eines anorganischen Smektits mit einer kationischen, organischen Verbindung, vorzugsweise einer quaternären Ammoniumverbindung, darstellt.

6. Dichtwandmasse nach einem der Ansprüche 1 bis 5, dadurch gekennzeichnet, daß das Ausgangsmaterial für den organophilen Smektit bzw. den anorganischen Aktivsmektit aus der Gruppe der Montmorillonite, Beidellite, Hectorite und Saponite ausgewählt ist.

7. Verfahren zur Herstellung einer Dichtwandmasse nach einem der Ansprüche 1 bis 6, dadurch gekennzeichnet, daß man eine wäßrige Suspension, enthaltend den anorganischen Aktivsmektit mit dem hydraulischen Bindemittel und dem organophilen Smektit bzw. mit einer Vormischung des hydraulischen Bindemittels mit dem organophilen Smektit vermischt.
